Europäisches Patentamt

European Patent Office

Office européen des brevets

(11) Veröffentlichungsnummer: **0 372 278**
**A2**

(12) # EUROPÄISCHE PATENTANMELDUNG

(21) Anmeldenummer: **89121338.1**

(22) Anmeldetag: **17.11.89**

(51) Int. Cl.5: **G01N 23/223**

(30) Priorität: **02.12.88 DE 3840590**

(43) Veröffentlichungstag der Anmeldung:
**13.06.90 Patentblatt 90/24**

(84) Benannte Vertragsstaaten:
**AT BE CH DE ES FR GB GR IT LI LU NL SE**

(71) Anmelder: **GKSS Forschungszentrum
Geesthacht GmbH
Max-Planck-Strasse
D-2054 Geesthacht(DE)**

(72) Erfinder: **Schwenke,Heinrich
Fernsicht 4
D-2058 Escheburg(DE)**
Erfinder: **Knoth,Joachim
Duwockskamp 14
D-2050 Hamburg 80(DE)**
Erfinder: **Schneider,Harald
Wandsbeker Ring 28
D-2054 Geesthacht(DE)**
Erfinder: **Weisbrod,Ulrich
Töpferhof 9
D-2050 Hamburg 80(DE)**
Erfinder: **Rosomm,Herbert
Hanseatenweg 50
D-2054 Geesthacht(DE)**

(74) Vertreter: **Niedmers, Ole, Dipl.-Phys. et al
Patentanwälte Niedmers & Schöning
Jessenstrasse 4
D-2000 Hamburg 50(DE)**

(54) Verfahren und Anordung zur Untersuchung von Proben nach der Methode der Röntgenfluoreszenzanalyse.

(57) Es wird ein Verfahren zur Untersuchung von Proben (15) nach der Methode der Röntgenfluoreszenzanalyse mittels eines Strahlungsdetektors (22) zu Erfassung einer von der analysierenden Probe (15) herrührenden Sekundärstrahlung (18) vorgeschlagen, auf die eine in ihrem Strahlengang in wenigstens einem Freiheitsgrad verstellbare Röntgenprimärstrahlung (17, 170) gerichtet ist, und eine Anordnung zur Ausführung dieses Verfahrens. Gemäß dem Verfahren wird eine Probenträgeroberfläche (25) in einen definierten Abstand (13) zur einer Referenzebene (22) überführt, an der die Röntgenprimärstrahlung (17) unter Totalreflexionsbedingungen reflektiert wird. Nachfolgend wird der Strahlengang der Röntgenprimärstrahlung (17) relativ zur Referenzebene (22) verstellt und gleichzeitig wird das Strahlungsspektrum der Sekundärstrahlung (18) der auf der Probenträgeroberfläche (25) angeordneten Probe (15) mit dem Strahlungsdetektor (12) beobachtet. Anschließend wird bei einem vorbestimmten Energiebetrag der Primärstrahlung (17) ein Sekundärstrahlungsintensitätsmaximum ermittelt, dem ein bestimmter Referenzwinkel zugeordnet wird.

# Verfahren und Anordnung zur Untersuchung von Proben nach der Methode der Röntgenfluoreszenzanalyse

Die Erfindung betrifft ein Verfahren zur Untersuchung von Proben nach der Methode der Röntgenfluoreszenzanalyse mittels eines Strahlungsdetektors zur Erfassung einer von der zu analysierenden Probe herrührenden Sekundärstrahlung, auf die eine in ihrem Strahlengang in wenigstens einem Freiheitsgrad verstellbare Röntgenprimärstrahlung gerichtet ist, sowie eine Anordnung zur Ausführung eines derartigen Verfahrens.

Bei einer bekannten (DE-PS 36 06 748) Vorrichtung wird die Primärstrahlung einer Röntgenröhre streifend in einem Winkel von wenigen Bokenminuten auf die Oberfläche der zu untersuchenden Probe gelenkt, wobei die Einstellung des wirksamen Einfallswinkels durch Veränderung der Höhe der Röntgenröhre relativ zur zu untersuchenden Probe vorgenommen wird. Eine unmittelbar im Strahlengang nach der Röntgenröhre eingefügte Blende begrenzt die Divergenz der von der Röntgenröhre abgegebenen Primärstrahlung.

Grundsätzlich gilt für diese bekannte Vorrichtung als auch allgemein, daß bei streifendem Einfall von Röntgenstrahlung auf plane Oberflächen die primäre Röntgenstrahlung nur eine nur geringe vertikale Eindringtiefe in den Körper unterhalb der Oberfläche aufweist. Für Einfallswinkel unter dem Grenzwinkel der Totalreflexion ist die Eindringtiefe sogar nur auf wenige nm beschränkt. Dieser an sich bekannte Effekt macht Anordnungen zur Messung der charakteristischen Fluoreszenzstrahlung (Sekundärstrahlung) bei streifendem Einfall der Primärstrahlung grundsätzlich zu einem potentiell geeigneten Instrument zur Elementbestimmung in oberflächennahen Schichten. Darüber hinaus ist ein derartiger Effekt auch für die Röntgenfluoreszenzanalyse kleinster zu untersuchender Proben im μg-Bereich möglich, z. B. von Stäuben oder Rückständen aus Lösungsmitteln, wobei die Proben auf plane polierte Oberflächen, die dann als Probenträger dienen, gegeben werden. Bei dieser Anwendung führt die unter Totalreflexionsbedingungen extrem niedrige, vom Untergrund des Probenträgers herrührende Beeinflussung zu Nachweisgrenzen im pg-Bereich.

Beide Anwendungen des Totalreflexionseffekts in der Röntgenfluoreszenzanalyse, d. h. sowohl die Analyse oberflächennaher Schichten als auch die extreme Spurenanalyse von Proben, die auf geeigneten Probenträgern aufgebracht werden, stellen erhebliche Anforderungen an die technische Ausgestaltung von Totalreflexionsanordnungen.

Diese hohen Anforderungen ergeben sich aus den gegenläufigen Forderungen nach hoher Primärstrahlungsintensität (geringer Abstand zwischen Röntgenröhre und zu analysierender Probe) und einer hohen Genauigkeit der Winkeleinstellung (weiter Abstand zwischen Röhre und Probe) . Bedingt durch das einer Röntgenröhre zugrunde liegende physikalische Prinzip ist mit z. Z. verfügbaren Röntgenröh-ren lediglich eine Primärstrahlungsintensität erreichbar, die im Vergleich zu der mit Großbeschleunigern erzeugbaren Synchrodronstrahlung sehr gering ist. Allein aus diesem Grunde ist es zwingend, bei der Verwendung von Röntgenröhren als Strahlungsquellen für derartige Anordnungen möglichst geringe Abstände zwischen deren Anode und dem zu untersuchenden Objekt zur Minimierung von Raumwinkelverlusten vorzusehen.

Darüber hinaus hat es sich als vorteilhaft erwiesen, die Röntgenstrahlung nicht direkt sondern nach Umlenkung über eine totalreflektierende, spiegelnde Fläche auf die Probe zu richten. Eine Anordnung, wie sie beispielsweise aus der DE-PS 27 36 960 bekannt ist, schränkt jedoch die Einstellbarkeit des Einfallwinkels auf die Probe derart ein, daß sie für die Analyse von Oberflächen, die eine in weiten Grenzen freie Einstellung des Einfallwinkels verlangt, unbrauchbar ist.

Es ist Aufgabe der vorliegenden Erfindung ein Verfahren zur Untersuchung von Proben nach der Methode der Röntgenfluoreszenzanalyse der eingangs genannten Art zu schaffen, mit dem die Bestimmung des Einfallswinkels der Primärstrahlung auf eine Probe mit höherer Genauigkeit als bisher möglich ist, wobei beliebige Einfallswinkel der Primärstrahlung auf die Probenoberfläche exakt eingestellt werden können sollen und der Einfallswinkel der Primärstrahlung absolut meßbar ist.

Gelöst wird die Aufgabe gemäß der Erfindung dadurch, daß

a. eine Probenträgeroberfläche parallel in einen definierten Abstand zu einer Referenzebene überführt wird, an der die Röntgenprimärstrahlung unter Totalreflexionsbedingungen reflektiert wird,

b. das nachfolgend der Strahlengang der Röntgenprimärstrahlung relativ zur Referenzebene verstellt und gleichzeitig das Strahlungsspektrum der Sekundärstrahlung der auf der Probenträgeroberfläche angeordneten Probe mit dem Strahlungsdetektor beobachtet wird und

c. anschließend bei einem vorbestimmten Energiebetrag der Primärstrahlung ein Sekundärstrahlungsintensitätsmaximum ermittelt wird, dem ein bestimmter Referenzwinkel zugeordnet wird.

Der Vorteil des erfindungsgemäßen Verfahrens liegt im wesentlichen darin, daß mit ihm das für die Totalreflexions-Röntgenfluoreszenzspektroskopie zentrale Problem oder Winkelmessung in optimaler Weise gelöst wird. Zudem können mit dem erfindungsgemäßen Verfahren vorteilhafterweise alle beliebigen Einfallswinkel der Primärstrahlung auf die Probenoberfläche exakt und automatisch eingestellt werden.

Gemäß einer vorteilhaften Ausgestaltung des Verfahrens ist jeder beliebige Einfallswinkel, unter dem die an der Referenzebene reflektierte Röntgenprimärstrahlung auf der Probenoberfläche auftritt, relativ zum Referenzwinkel einstellbar.

Die erfindungsgemäße Anordnung zur Untersuchung von Proben nach der Methode der Röntgenfluoreszenzanalyse umfaßt einen als Träger dienenden Körper, an dem ein Strahlungsdetektor zur Erfassung einer von der zu analysierenden Probe herrührenden Sekundärstrahlung angeordnet ist, sowie eine relativ zum Trägerkörper verstellbare Röntgenstrahlungsquelle, deren Primärstrahlung beim Analysevorgang auf die Probe gerichtet ist.

Es ist auch Aufgabe der vorliegenden Erfindung eine Anordnung zur Röntgenfluoreszenzanalyse zu schaffen, bei der unter Einhaltung minimaler Abstände zwischen der Röntgenröhre und der zu untersuchenden Probe eine freie und sich gegenseitig nicht beeinflussende Einstellbarkeit der Auftreffwinkel der Primärstrahlen auf die Spiegel wie auf die Probe mit einfachen Mitteln geschaffen wird, wobei Winkeleinstellungen in einem Genauigkeitsgrad bis zu 0,1 mrd erreicht werden sollen und die Vorrichtung einfach im Aufbau und damit kostengünstig bereitstellbar sein soll.

Gelöst wird die Aufgabe gemäß der Erfindung dadurch, daß am Trägerkörper die von der Röntgenstrahlungsquelle kommende Primärstrahlung unter Totalreflexionsbedingungen reflektiert wird.

Der Vorteil der erfindungsgemäßen Lösung besteht im wesentlichen darin, daß der Winkel am quasi als Spiegel wirkenden Trägerkörper genutzt werden kann, um über die spezielle Energie/ Winkelbeziehung des Reflexionskoeffizienten der Röntgenstrahlung das Energiespektrum der Primärstrahlung unabhängig vom Auftreffwinkel auf die Probe zu beeinflussen.

Die Probe wird dabei gegenüber dem Trägerkörper auf einem exakt definierten Abstand (Größenordnung ca. $10^{-4}$ m) gehalten, so daß die am Trägerkörper reflektierte Strahlung auf die Probe fällt.

Dieses kann vorteilhafterweise noch dadurch unterstützt werden, daß der Reflexionsbereich der Primärstrahlung am Trägerkörper vertikal und/oder horizontal fokussierend, beispielsweise auch in Form einer Krümmung der Reflexionsfläche, ausgebildet ist.

Bei einer weiteren vorteilhaften Ausgestaltung der Erfindung ist im wesentlichen im Reflexionsbereich der Primärstrahlung am Trägerkörper eine Blende angeordnet, durch die direkte Strahlungsanteile der Primärstrahlung vom Probenort ferngehalten werden. Dadurch kann sichergestellt werden, daß die zu analysierende Probe nur durch die Primärstrahlung angeregt wird, die an der Reflexionsfläche des Trägerkörpers unter Totalreflexionsbedingungen reflektiert worden ist. Die Blende kann vorteilhafterweise als Stegblende ausgebildet sein und zwar mit einer Schlitzbreite von 1 bis 5 x $10^{-5}$ m.

Der Trägerkörper, der vorteilhafterweise als quaderförmiger Block ausgebildet ist, weist eine Bohrung auf, die diesen im wesentlichen rechtwinklig zu einer Referenzebene der Primärstrahlung durchquert, wobei in der Bohrung der Detektor angeordnet ist. Der Trägerkörper übernimmt bei dieser Ausgestaltung der Erfindung sowohl die Funktion eines Spiegels für die von der Röntgenstrahlungsquelle herrührende Primärstrahlung (Röntgenspiegel) als auch die einer Bezugseinrichtung (optische Bank), zu der die Blende und die zu analysierende Probe ausgerichtet werden kann. Diese Doppelfunktion erforderte bisher mehrere getrennte Bauteile, die zudem gesondert montiert und justiert werden mußten mit einer zwangsweise damit verbundenen Vielzahl von Fehlermöglichkeiten.

Der Detektor ist gemäß einer anderen vorteilhaften Ausgestaltung der Erfindung von einer Blende umgeben, die in Form einer Zylinderblende um den Detektor herum ausgebildet sein kann. Die Blende hält unerwünschte Primär-und Streustrahlung vom Detektor fern und definiert den zu untersuchenden gewünschten Ausschnitt der Probe durch Ausblendung des jeweils unerwünschten Fluoreszenzstrahlenbereichs, der aus den anderen Bereichen der Probe kommt.

Obwohl prinzipiell auf beliebige geeignete Weise unterhalb des Detektors bzw. unterhalb eines Bereichs um eine Detektorempfangsachse herum eine Probe bzw. ein Probenträger mit einer Probe angeordnet sein kann, ist es vorteilhaft, im wesentlichen zentrisch zu der Detektorempfangsachse, die im wesentlichen rechtwinklig zu der Referenzebene verläuft, einen auswechselbaren Probenträger anzuordnen, der vorteilhafterweise zur Detektorempfangsachse axial oder winklig verstellbar ausbildbar ist. Auf diese Weise kann der Auftreffwinkel der am Trägerkörper reflektierten Primärstrahlung auf die Probe unabhängig vom Reflexionswinkel am Trägerkörper variiert werden, was von großer praktischer Bedeutung ist, weil sowohl der Reflexionswinkel am Trägerkörper als auch der Auftreffwinkel häufig nach verschiedenen Kriterien eingestellt werden müssen, d. h. der Winkel am Trägerkörper wird für die schon erwähnte spezielle Energie/Winkelbeziehung des Reflexionskoeffizienten der Röntgenstrahlung genutzt, während der Auftreffwinkel auf die Probe die Eindringtiefe der Primärstrahlung in die Probe bestimmt.

Insbesondere für ein hochgenau und/oder automatisches Meßverfahren, bei der eine hochgenaue automatische Probenpositionierung unabdingbar ist, wird der Abstand zwischen einer Oberfläche einer vom Probenträger aufgenommenen Probe und der Referenzebene des Trägerkörpers durch Abstandserfassungsmittel erfaßt. Auf diese Weise kann der Abstand hochgenau eingestellt werden und es ist kein Anpressen der zu analysierenden Probe an den Trägerkörper nötig.

Dabei wird das Abstandserfassungsmittel vorzugsweise durch eine Meßeinrichtung gebildet, die eine bewertbare physikalische Größe entsprechend dem Abstand zwischen Trägerkörper und Oberfläche der Probe liefert. Die Meßgröße kann unmittelbar auf Stellglieder gegeben werden, die den Probenträger bzw. die darauf angeordnete Probe in einem gewünschten Abstand und Winkel zum Detektor bzw. zur Detektorempfangsachse einstellen.

Insbesondere für eine gewünschte hochgenaue automatische Probenpositionierung ist es vorteilhaft, die Meßeinrichtung derart auszubilden, daß der Abstand zwischen der Reflexionsfläche und der Oberfläche der Probe berührungslos erfaßt wird.

Unabhängig von der Art der Ausbildung des Abstandserfassungsmittels kann nun bei Vorsehen eines Abstandserfassungsmittels die Positionierung der Probe bzw. des Probenhalters mit Oberflächen mit einem Durchmesser von bis zu 15 cm jede Position eingestellt werden. Durch den hohen Grad der erfindungsgemäß erreichbaren Positionierungsgenauigkeit ist die Verwendung von Probenwechslern ohne Einschränkung gegeben und es ist auch dabei die Abtastung von ausgedehnten Proben ohne Einschränkung möglich.

Gemäß einer vorteilhaften Ausgestaltung der Anordnung ist der Trägerkörper wenigstens im Reflexionsbereich mit einer alternierend periodischen Folge einer Mehrzahl einzelner Lagen aus Metall und Nichtmetall beschichtet. Mehrlagige Schichten dieser Art werden auch SMLS-Beschichtungen (SMLS-Synthetik Multilayer Structure) bezeichnet, wobei es sich bei diesen SMLS-Strukturen um an sich bekannte Schichtaufbauten handelt, mit denen erfindungsgemäß bei der Reflexion an derartigen Beschichtungen eine Band-Pass-Filterung möglich ist, mit der eine große Flankensteilheit und Selektivität wird und deshalb eine hochgenaue Winkelmessung möglich ist. Durch Vorsehen dieser SMLS-Beschichtung im Reflexionsbereich wird somit die Meßgenauigkeit des Verfahrens und der Anordnung gemäß der Erfindung nochmals erheblich verbessert bzw. vergrößert.

Bei der Ausbildung der einzelnen Lagen ist es vorteilhaft, als Metall Wolfram und/oder Platin vorzusehen und als Nichtmetall Kohlenstoff und/oder Silizium und/oder ein Metallsilizit. Die Zahl der Schichten, die die Gesamtschicht bildet, ist wenigstens 20 - 200 groß, wobei die Dicke der Lagen im Bereich von $10^{-9}$ m , d.h. im Bereich von Nanometern liegt.

Die Erfindung wird nun unter Bezugnahme auf die nachfolgenden schematischen Zeichnungen anhand eines Ausführungsbeispieles eingehend beschrieben. Darin zeigen:

Fig. 1 in der Seitenansicht in teilweisem Schnitt die bei der Anordnung zusammenwirkenden Komponenten mit schematisch dargestelltem Strahlengang der Primärstrahlung,

Fig. 2 in perspektivischer Darstellung den prinzipiellen Aufbau gemäß der Darstellung von Fig. 1 unter teilweiser Weglassung einzelner Komponenten ,

Fig. 3 eine Funktion der Eindringtiefe der Primärstrahlung in Abhängigkeit vom Einfallswinkel bei zwei unterschiedlichen Primärenergien unter Totalreflexionsbedingungen und

Fig. 4 die Abhängigkeit der Intensität der von einem Detektor erfaßten Sekundärstrahlung von den eingestellten Referenzwünschen bei einer vorbestimmten Energie der Primärstrahlung, wobei ein Intensitätsmaximum der Sekundärstrahlung einem bestimmten Referenzwinkel zugeordnet ist.

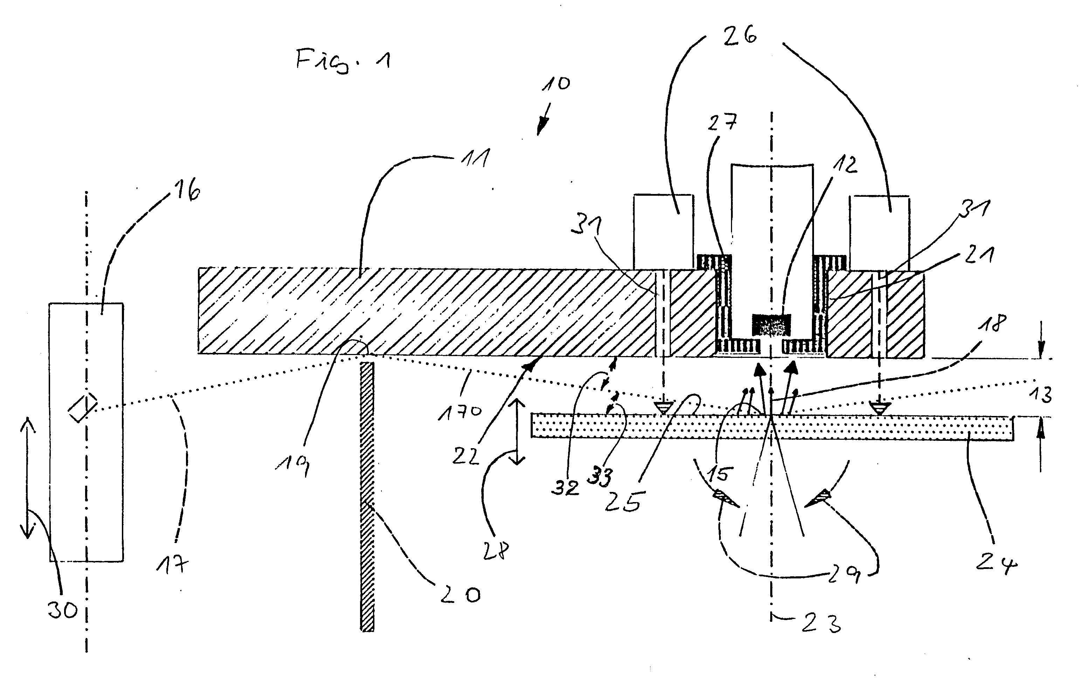

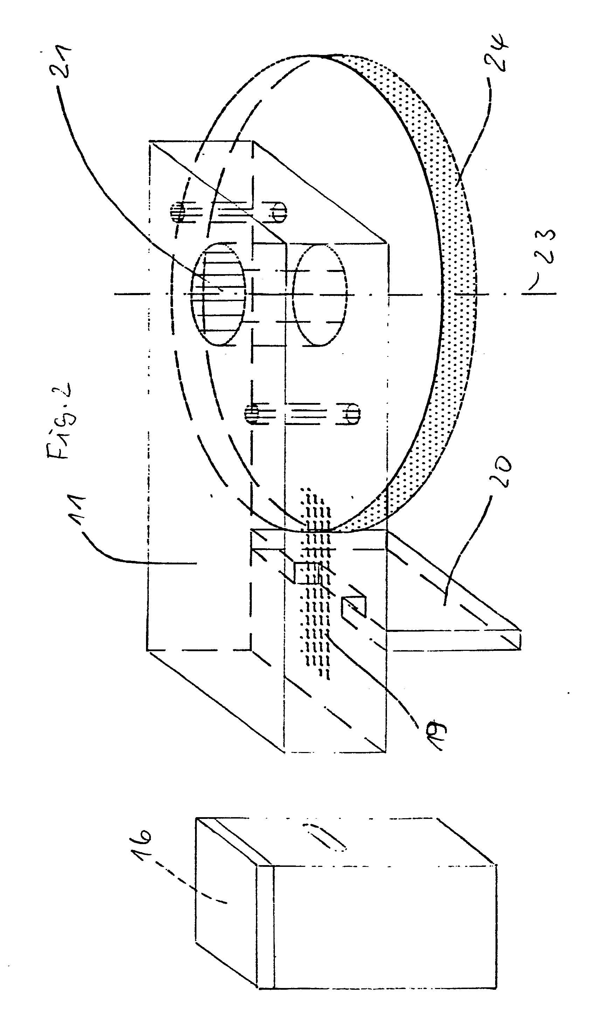

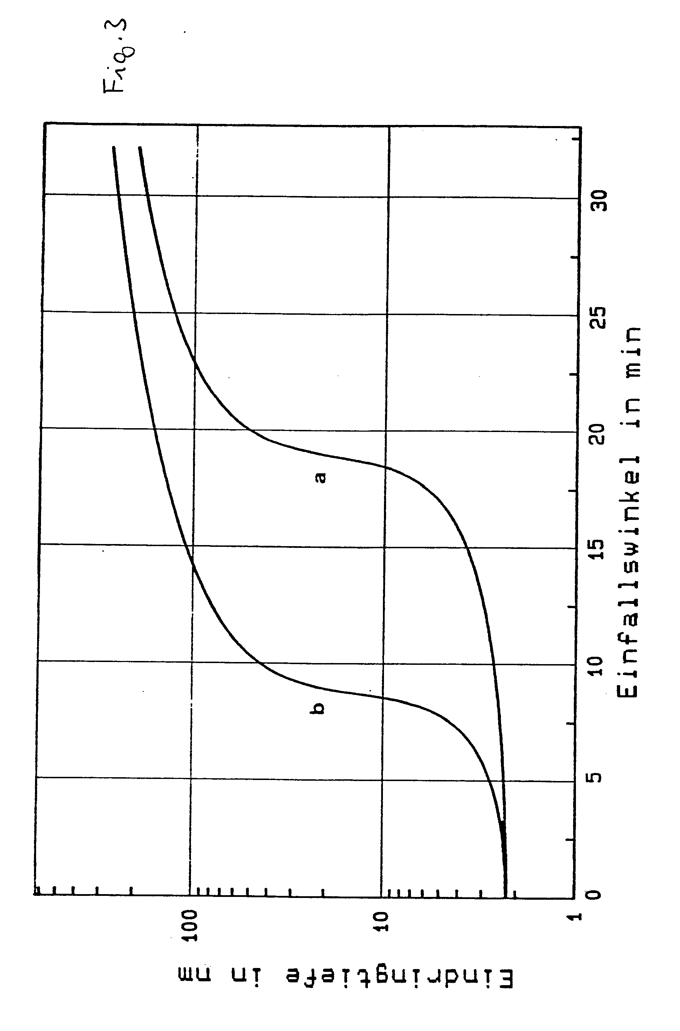

Die Anordnung 10, vgl. insbesondere Fig. 1, besteht im wesentlichen aus einem Trägerkörper 11, der als quaderförmiger Block ausgebildet ist, sowie einer Röntgenstrahlungsquelle 16, die gemäß Pfeil 30 verschiebbar ist. Es sei darauf hingewiesen, daß die Verschiebbarkeit der Röntgenstrahlungsquelle 16 in Richtung des Pfeiles 30 nur symbolisch gemeint ist. Tatsächlich ist die Röntgenstrahlungsquelle 16 in allen Freiheitsgraden verschieb- bzw. verschwenkbar relativ zum Trägerkörper 11 ausgebildet. Im Trägerkörper 11 ist in einem Abstand von der Röntgenstrahlungsquelle 17 eine Bohrung 21 ausgebildet, die den Trägerkörper 11 im wesentlichen rechtwinklig zur grundsätzlich flächig ausgebildeten Unterseite des Trägerkörpers 11 durchquert. Der Reflexionsbereich 19 der Primärstrahlung 17 am Trägerkörper 11 wird durch die Unterseite des Trägerkörpers 11 zu einer Referenzebene 22 für die Probenoberfläche verlängert. In der Bohrung 21 ist als Teil der Anordnung 10 der Strahlungsdetektor 12 angeord-net. Der Detektor weist eine Detektorempfangsachse 23 auf, die rechtwinklig zur Reflexionsfläche 22 der Primärstrahlung 17, 170 verläuft. Zentrisch zu der Detektorempfangsachse, bei Betrachtung der Anordnung der Fig. 1 und 2, und unterhalb der Reflexionsfläche 22 ist ein auswechselbarer Probenträger 24 angeordnet, der zur Detektorempfangsachse 23 axial und winklig entsprechend der Pfeile 28 und 29 verschwenkbar ist.

Auf dem Probenträger 24 ist eine zu analysierende Probe 15 positioniert, was symbolisch durch die in Richtung des Strahlungsdetektors 12 gerichteten Pfeile, die die von der Probe 15 herrührende Sekundärstrahlung 18 (Fluoreszenzstrahlung) zeigen, symbolisiert ist.

Oberhalb, bei Betrachtung der Darstellung der Fig. 1 und 2, der Referenzebene 22 ist auf dem als quaderförmigem Block ausgebildeten Trägerkörper 11 wenigstens ein Abstandserfassungsmittel 26 angeordnet. An der Stelle, an der das Abstandserfassungsmittel 26 am Trägerkörper ausgebildet ist, wird der Trägerkörper 11 durch ein Durchgangsloch 31 durchquert, wobei das Durchgangsloch im wesentlichen parallel zur Detektorempfangsachse 23 verläuft. Der Abstand 13 zwischen einer Oberfläche 25 einer vom Probenträger 24 aufgenommenen Probe 15 und der Referenzebene 22 des Trägerkörpers 11 ist somit durch das Abstandserfassungsmittel 26 erfaßbar. Das Abstandserfassungsmittel 26 kann beispielsweise durch eine Meßeinrichtung gebildet werden, die mit Meßfühlern versehen ist, so daß eine bewertbare physikalische Größe entsprechend dem Abstand 13 zwischen Trägerkörper 11 und der Oberfläche 25 der Probe 15 geliefert wird, indem beispielsweise die Meßfühler unmittelbar die Oberfläche 25 der Probe 15 bzw. den Probenträger 24 berühren und bei Verschiebung auf das Abstandserfassungsmittel 26 zu bzw. von diesem weg bewegt werden.

Die Meßeinrichtung kann darüber hinaus, was hier im einzelnen nicht dargestellt ist, berührungslos den Abstand zwischen der Referenzebene 22 und der Oberfläche 25 der Probe 15 erfassen.

Schließlich umaßt die Anordnung 10 Blenden 20, 27, wobei die Blende 20 im wesentlichen im Reflexionsbereich der Primärstrahlung am Trägerkörper 11 angeordnet ist. Die Blende 20 ist als Stegblende ausgebildet. Die Schlitzbreite der Blende 20 beträgt beispielsweise 1 bis 5 x 10$^{-5}$ m. Die Blende 20 ist dabei in etwa in der Mitte zwischen der Anode der Röhre der Röntgenstrahlungsquelle 16 und der Probe 15 angebracht. Die Breite der Schlitzes kann beispielsweise durch Distanzstücke gegenüber der Reflexionsbereich 19 des Trägerkörpers 11 eingestellt werden.

Um den Strahlungsdetektor 12 herum ist die vorgenannte zweite Blende 27 ausgebildet, die vorzugsweise in Form einer Zylinderblende geformt ist. Diese Zylinderblende hält zusätzlich unerwünschte Primär- und Streustrahlung vom Strahlungsdetektor 12 fern und definiert den zu untersuchenden Ausschnitt der flächenhaften Probe 15 durch Ausblendung der sekundären Fluoreszenzstrahlung 18.

Der Strahlengang der Primärstrahlung 17, 170 ist durch die gepunktete Linie dargestellt, die von der Röntgenstrahlungsquelle 16 ausgeht, am Trägerkörper 11 in einem Reflexionsbereich 19 unter Totalreflexionsbedingungen reflektiert wird und dann als reflektierte Primärstrahlung 170 auf die Probe 15 gelangt.

Der Trägerkörper 11 kann vorzugsweise aus einem Quarzglas oder aus Metall bestehen, wobei grundsätzlich aber jedes beliebige geeignete Material den Trägerkörper 11 bilden kann. So ist es auch möglich, den Trägerkörper beispielsweise aus Quarzglas herzustellen und die Reflexionsfläche 22 metallisch zu beschichten.

Der Trägerkörper 11 kann vorzugsweise im Reflexionsbereich 19 mit einer alternierend periodischen Folge einer Mehrzahl einzelner Lagen aus Metall oder Nichtmetall beschichtet sein. Die durch die Mehrzahl der Lagen gebildete Beschichtung wird allgemein als SMLS-Beschichtung bezeichnet (SMLS-Synthetic Multilayer Structure). Die einzelnen Lagen der Gesamtschicht können beispielsweise als Metall Wolfram und/oder Platin aufweisen, während die Lagen aus Nichtmetall beispielsweise durch Kohlenstoff und/oder Silizium und/oder ein Metall Silizit gebildet werden können. Die Zahl der Lagen kann beliebig variiert werden, sie ist jedoch vorzugsweise 20 - 200 groß, wobei die Dicke der Lagen im Bereich 10$^{-9}$ m liegt.

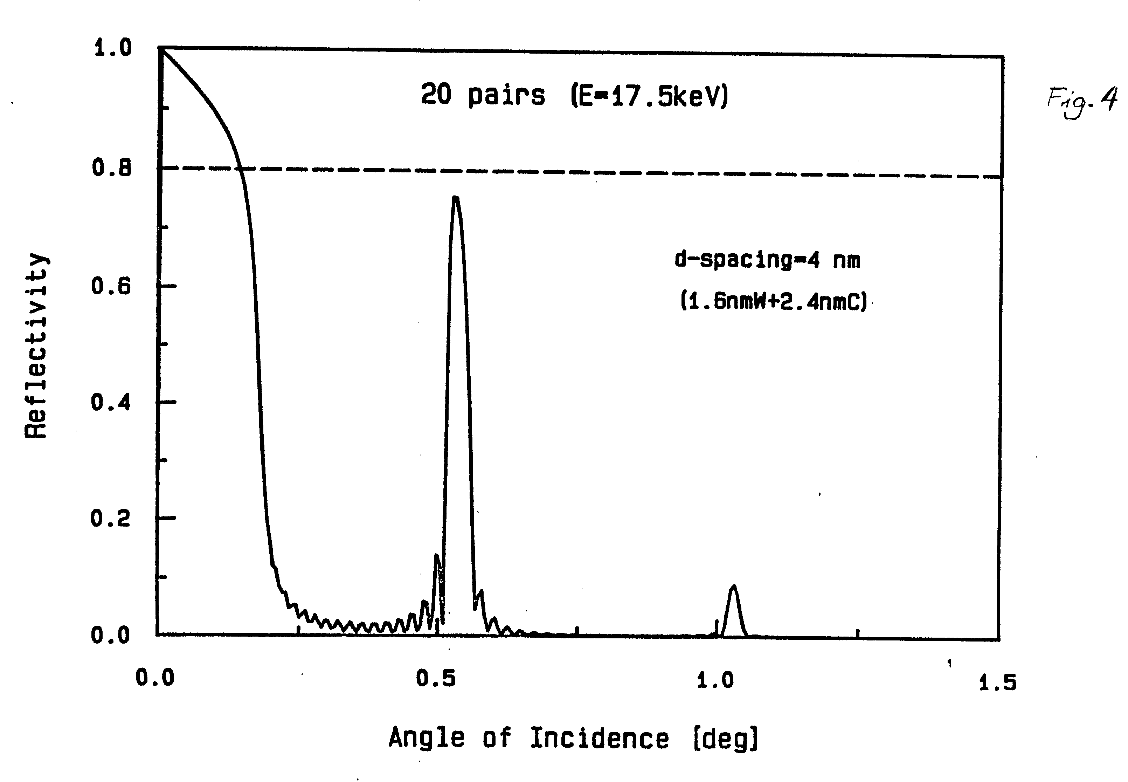

Wie Fig. 4 zeigt, ist im Gegensatz zu nicht auf vorangehend beschriebene Art optimierten Reflexionsoberflächen (Reflexionsbereich 19) bei der Reflexion an SMLS-Beschichtungen eine die Band-Pass-Filterung an SMLS-Schichten ausnutzende Winkelbestimmung möglich, die die sehr hohe Flankensteilheit und Selektivität ausnutzt, was bisher nicht möglich war und zu einer wesentlichen Erhöhung der Meßgenauigkeit führte.

Das mit der Anordnung 10 ausführbare Verfahren läuft in folgenden Verfahrensschritten ab: auf der Probenträgeroberfläche 25 wird zunächst die Probe 15 angeordnet. Die Probenträgeroberfläche 25 wird dann parallel in einen definierten Abstand 13 zur Referenzebene 22 überführt, an der die Röntgenprimärstrahlung 17 unter Totalreflexionsbedingungen im Reflexionsbereich 19 reflektiert wird und als reflektierte Strahlung 170 auf die auf der Probenträgeroberfläche 25 angeordneten Probe 15 trifft. Nachfolgend wird die von der Röntgenstrahlungsquelle 16 ausgehende Primärstrahlung 17 zu ihrem Strahlengang relativ zur Referenzebene 22 variiert, vergl. Fig. 1 und zwar in Richtung des Pfeiles 30. Dadurch ändert sich der Reflexionswinkel 32 zwischen der Referenzebene 22 und dem Strahlengang der reflektierten Primärstrahlung 170. Gleichzeitig wird das Strahlungsspektrum der Sekundärstrahlung 18 der auf der Probenträgeroberfläche 25 angeordneten Probe 15 mit dem Strahlungsdetektor 12 beobachtet und zwar derart, daß anschließend bei einem vorbestimmten Energiebetrag der Primärstrahlung 17 ein Sekundärstrahlungs Intensitätsmaximum ermittelt wird, und zwar unter Verwendung bekannter Beziehungen zwischen dem Reflexionswinkel 32 und der Intensität der reflektierten Primärstrahlung 170, so daß dem Sekundärstrahlungsintensitätsmaximum ein bestimmter Reflexionswinkel zugeordnet werden kann.

Dabei kann jeder beliebige Einfallswinkel 33, unter dem die an der Referenzebene 22 reflektierte Primärstrahlung 17 auf der Probenträgeroberfläche 25 auftrifft, relativ zum ermittelten Referenzwinkel eingestellt werden.

Es sei noch erwähnt, daß der Probenträger 24 selbst die zu untersuchende Probe 15 sein kann, wenn beispielsweise der Probenträger 24 ein zu untersuchender Halbleiter-Wafer ist. Dann ist beispielsweise die Probe 15 eine zu untersuchende Struktur in oder unterhalb der Probenoberfläche 15 bzw. Probenträgeroberfläche 15.

Bezugszeichenliste

10 Anordnung
11 Trägerkörper
12 Strahlungsdetektor
13 Abstand
14
15 Probe
16 Röntgenstrahlungsquelle
17 Primärstrahlung
170 reflektierte Primärstrahlung
18 Sekundärstrahlung
19 Reflexionsbereich
20 Blende
21 Bohrung
22 Referenzebene
23 Detektorempfangsachse
24 Probenträger
25 Probenoberfläche
26 Abstandserfassungsmittel
27 Blende
28 Pfeil (Abstandsänderung)
29 Pfeil (Winkeländerung)
30 Pfeil
31 Durchgangsloch
32 Reflexionswinkel
33 Einfallswinkel

**Ansprüche**

1. Verfahren zur Untersuchung von Proben nach der Methode der Röntgenfluoreszenzanalyse mittels eines Strahlungsdetektors zur Erfassung einer von der zu analysierenden Probe herrührenden Sekundärstrahlung, auf die eine in ihrem Strahlengang in wenigstens einem Freiheitsgrad verstellbare Röntgenprimärstrahlung gerichtet ist, dadurch gekennzeichnet, daß

a. eine Probenträgeroberfläche parallel in einen definierten Abstand zu einer Referenzebene überführt wird, an der die Röntgenprimärstrahlung unter Totalreflexionsbedingungen reflektiert wird,

b. das nachfolgend der Strahlengang der Röntgenprimärstrahlungsquelle relativ zur Referenzebene verstellt und gleichzeitig das Strahlungsspektrum der Sekundärstrahlung der auf der Probenträgeroberfläche angeordneten Probe mit dem Strahlungsdetektor beobachtet wird und

c. anschließen bei einem vorbestimmten Energiebetrag der Primärstrahlung ein Sekundärstrahlungsintensitätsmaximum ermittelt wird, dem ein bestimmter Referenzwinkel zugeordnet wird.

2. Verfahren nach Anspruch 1, dadurch gekennzeichnet, daß jeder beliebige Einfallswinkel, unter dem die an der Referenzebene reflektierte Röntgenprimärstrahlung auf der Probenträgeroberfläche auftrifft, relativ zum Referenzwinkel einstellbar ist.

3. Anordnung zur Untersuchung von Proben nach der Methode der Röntgenfluoreszenzanalyse, umfassend einen als Träger dienenden Körper, an dem ein Strahlungsdetektor zur Erfassung einer von der zu analysierenden Probe herrührenden Sekundärstrahlung angeordnet ist, sowie eine relativ zum Trägerkörper verstellbare Röntgenstrahlungsquelle, deren Primärstrahlung beim Analysevorgang auf die Probe gerichtet ist, dadurch gekennzeichnet, daß am Trägerkörper (11) die von der Röntgenstrahlungsquelle (16) kommende Primärstrahlung (17) unter Totalreflexionsbedingungen reflektiert wird.

4. Anordnung nach Anspruch 3, dadurch gekennzeichnet, daß ein Reflexionsbereich (19) durch die Unterseite des Trägerkörpers (11) zu einer Referenzebene (22) für die Probenoberfläche verlängert wird.

5. Anordnung nach einem oder beiden der Ansprüche 3 oder 4, dadurch gekennzeichnet, daß der Reflexionsbereich (19) der Primärstrahlung am Trägerkörper (11) vertikal und/oder horizontal fokussierend ausgebildet ist.

6. Anordnung nach einem oder mehreren der Ansprüche 3 bis 5, dadurch gekennzeichnet, daß im wesentlichen im Reflexionsbereich (19) der Primärstrahlung (17) am Trägerkörper (11) eine Blende (20) angeordnet ist.

7. Anordnung nach Anspruch 6, dadurch gekennzeichnet, daß die Blende (20) als Stegblende ausgebildet ist.

8. Anordnung nach Anspruch 7, dadurch gekennzeichnet, daß die Stegblende eine Schlitzbreite von l bis $5 \times 10^{-5}$ m aufweist.

9. Anordnung nach einem oder mehreren der Ansprüche 3 bis 8, dadurch gekennzeichnet, daß der Trägerkörper (11) als quaderförmiger Block ausgebildet ist und eine Bohrung (21) aufweist, die den Trägerkörper (11) im wesentlichen rechtwinklig zur Referenzebene (22) der Primärstrahlung (17) durchquert, wobei in der Bohrung (21) ein Detektor (12) angeordnet ist.

10. Anordnung nach einem oder mehreren der Ansprüche 3 bis 9, dadurch gekennzeichnet, daß der Detektor (12) von einer Blende (27) umgeben wird.

11. Anordnung nach einem oder mehreren der Ansprüche 3 bis 10, dadurch gekennzeichnet, daß im wesentlichen zentrisch zu einer Detektorempfangsachse (23), die im wesentlichen rechtwinklig zu der Referenzebene (22) ein auswechselbarer Probenträger (24) angeordnet ist.

12. Anordnung nach Anspruch 11, dadurch gekennzeichnet, daß der Probenträger (24) zur Detektorempfangsachse (23) axial und winklig verstellbar ist.

13. Anordnung nach einem oder beiden der Ansprüche 11 oder 12, dadurch gekennzeichnet, daß der Abstand (13) zwischen einer Oberfläche (25) einer vom Probenträger (24) aufgenommenen Probe (15) und der Referenzebene (22) des Trägerkörpers (11) durch Abstandserfassungsmittel (26) erfaßbar ist.

14. Anordnung nach Anspruch 13, dadurch gekennzeichnet, daß das Abstandserfassungsmittel (26) durch eine Meßeinrichtung gebildet wird, die eine bewertbare physikalische Größe entsprechend dem Abstand (13) zwischen Trägerkörper (11) und der Oberfläche (25) der Probe (15) liefert.

15. Anordnung nach Anspruch 14, dadurch gekennzeichnet, daß die Meßeinrichtung berührungslos den Abstand zwischen der Reflexionsfläche (22) und der Oberfläche (25) der Probe (15) erfaßt.

16. Anordnung nach einem oder mehreren der Ansprüche 3 bis 15, dadurch gekennzeichnet, daß der Trägerkörper (11) aus Quarzglas besteht.

17. Anordnung nach einem oder mehreren der Ansprüche 3 bis 16, dadurch gekennzeichnet, daß der Trägerkörper (11) aus Metall besteht.

18. Anordnung nach einem oder mehreren der Ansprüche 3 bis 17, dadurch gekennzeichnet, daß der Trägerkörper (11) wenigstens im Reflexionsbereich (19) metallisch beschichtet ist.

19. Anordnung nach einem oder mehreren der Ansprüche 3 bis 18, dadurch gekennzeichnet, daß der Trägerkörper (11) wenigstens im Reflexionsbereich (19) mit einer alternierend periodischen Folge einer Mehrzahl einzelner Lagen aus Metall und Nichtmetall beschichtet ist.

20. Anordnung nach Anspruch 19, dadurch gekennzeichnet, daß Metall Wolfram und/oder Platin ist und daß das Nichtmetall Kohlenstoff und/oder Silizium und/oder ein Metall-Silizit ist.

21. Anordnung nach einem oder beiden der Ansprüche 19 oder 20, dadurch gekennzeichnet, daß die Zahl der Lagen wenigstens 20 - 200 groß ist, wobei die Dicke der Lagen im Bereich von $10^9$

m liegt.

Fig. 1

EP 0 372 278 A2

Fig.2

Fig. 3

EP 0 372 278 A2

Fig. 4

20 pairs (E=17.5keV)

d-spacing=4 nm

(1.6nmW+2.4nmC)

Reflectivity

Angle of Incidence [deg]

EP 0 372 278 A2